# EUROPEAN PATENT SPECIFICATION

(11) **EP 0 721 487 B1**
(45) Date of publication and mention of the grant of the patent: **07.02.2001**
(21) Application number: 94928725.4
(22) Date of filing: 29.09.1994
(51) Int. Cl.: C09D 133/08, C09D 133/10, C09D 133/12, C09D 157/12, C09D 201/06, C08F 246/00, C09D 133/06, C09D 157/10

(54) **WATER-BORNE CROSS-LINKABLE AMINOALKYL-ALKOXYSILANE COATINGS**
VERNETZBARE AMINOALKYL-ALKOXYSILAN BESCHICHTUNGEN AUF WASSERBASIS
REVETEMENTS A L'EAU RETICULABLES CONTENANT DE l'AMINOALKYL-ALCOXYSILANE

(30) Priority: 29.09.1993 AU PM152493
(43) Date of publication of application: 17.07.1996
(73) Proprietor: Orica Australia Pty Ltd, Melbourne, Victoria 3000 (AU)
(72) Inventor: SERELIS, Algirdas, Kazimieras, Mount Waverley, VIC 3149 (AU); PARAVAGNA, Olga, Maree, Blackburn South, VIC 3130 (AU); LEARY, Bruce, Red Hill, VIC 3937 (AU)
(74) Representative: Bannerman, David Gardner
(86) International application number: AU9400598
(87) International publication number: WO9509208

(56) References cited:
- EP-A- 0 442 653
- EP-A- 0 516 074
- US-A- 5 242 978

## Description

This invention relates to water-borne coatings and in particular to coatings containing aminoalkyl-alkoxysilane or aminoalkyl-silanol in combination with acetoacetate functional groups.

### BACKGROUND OF THE INVENTION

Polymeric coatings for use on a variety of substrates for protective and decorative purposes are well known. When in liquid form prior to application they usually have volatile organic solvent or water as the liquid carrier phase which evaporates after application to leave a polymer coating or film on the substrate.

For many protective coating applications film properties such as hardness and solvent resistance are improved by causing them to become crosslinked or cured after application to the substrate. For this purpose it is known to employ crosslinkable coating compositions whereby the composition includes components which react to cause crosslinking of the applied film. Such reaction may be augmented or catalysed by the presence of atmospheric oxygen or water as in the case of alkyd coatings and moisture curable polyurethane coatings respectively. Alternatively the binder may have reactive and co-reactive groups which covalently co-react to form a crosslinked coating.

Such a crosslinking reaction is of course not intended to take place to an unacceptable degree until after the composition is applied to the substrate. As might be imagined, many such coating compositions intended for crosslinking at ambient temperatures may have a short shelf-life, i.e. an unacceptably short period of time before premature crosslinking occurs in the liquid pre-application composition leading to unacceptable application or film properties. In some applications poor shelf-life can be overcome by storing the composition as a two-pack product and only combining the two packs shortly before application. This is usually not acceptable for DIY decorative products but it is an acceptable compromise for industrial applications such as the refinishing of motor vehicles.

For example, a hydroxyl containing polyester can be combined with a multi functional isocyanate shortly before application to provide a crosslinkable composition that cures at ambient temperatures after application to give a hard crosslinked film. Unfortunately some crosslinking systems that achieve good film properties at ambient temperature have accompanying occupational health problems.

In an endeavour to prepare compositions with alternative crosslinking mechanisms a potentially useful coating composition comprising an acetoacetate functional polymer, e.g. an acrylic polymer or a polyester, and a polyamine have been disclosed. Examples of such compositions are described, for example, in Journal of Coating Technology, Vol. 61 (771) pages 31-37 1989. These compositions relate to solution polymers containing acetoacetate groups in organic solvents and a range of crosslinking agents, with particular reference to hexamethoxymethylmelamine.

Crosslinking has been reported with solution acrylic polymers containing acetoacetate functional groups which have been combined with crosslinking agents having aminoalkyl-alkoxysilane functional groups. For example, Japanese patent application Jpn. Kokai Tokyo Koho JP 04,189,874 filed on 22 November 1990 and published 8 July 1992 discloses crosslinkable high solids coating compositions prepared from a solution polymer containing acetoacetate groups combined with an aminoalkyl-alkoxysilane. The compositions are prepared and used in the presence of organic solvent. The curing mechanism is said to include the silyl group of the amino alkyl - alkoxysilane undergoing a self-bridging reaction. To meet the high solids requirement the solution polymers containing the acetoacetate groups are low molecular weight. The number average molecular weight of all the examples is 3000. Clearly it is necessary for water to be kept away from these compositions until the composition has been applied to the substrate as moisture is part of the curing mechanism.

Similarly a recent US patent by Bayer AG, US Patent No 5,242,978 discloses the combination of a specific class of aminoalkyl-alkoxysilane as hardeners for plastic precursors containing at least two acetoacetate and/or acetoacetamide groups. Again as for the Japanese citation discussed above these relate to polymers or oligomers carried in organic solvents. The advantages of these compositions are that good pot life is obtained and that crosslinking does not rely on contact with atmospheric moisture. The molecular weight of the plastic precursor is between 400 and 25,000 to achieve their desired properties. The ratio of primary amine groups to acetoacetate groups is from 0.5:1 to 1:1 and preferably from 8:1 to 1:1. Again, this patent teaches that the presence of water before the composition is applied must be avoided.

Water-borne coatings are preferred from safety and environmental perspectives compared to coating compositions containing volatile organic solvents. Accordingly, water-borne coatings have been widely used for many years in the decorative coatings area. However in the motor vehicle refinish area, where paint systems used for the repairing and repainting of motor vehicles are required to match the performance of the original paint system, water-borne coatings have had little impact.

One particularly demanding application is for primer/fillers for application over bare metal and previously painted surfaces in the motor vehicle refinish area. In the case of such coatings early film properties such as sandability and substrate and intercoat adhesion and longer term properties such as corrosion and humidity performance have been very difficult to achieve with water-borne systems compared to conventional solvent-based paints. Furthermore, flash rusting over bare steel can sometimes be a problem with water based primers.

In practice it is often very difficult to adapt and use crosslinking reaction systems that are used in organic solution systems to corresponding water-borne systems because of the presence of water which may interfere with the crosslinking reaction scheme. For example, some organic solvent based systems rely on atmospheric moisture to unblock amine/aldehydes so that they may react after film formation. Clearly such systems would have no application in water based coatings as the unblocking and crosslinking reaction would then occur before application.

Water based crosslinkable binders based on acetoacetate functional groups and polyamines as disclosed in our co-pending Australian patent application No. PM1525 have not been able to produce rapid enough crosslinking to provide adequate early film properties for some applications. This is particularly evident in the area of primer/fillers in the refinishing of motor vehicles where rapid crosslinking is required at pigment volume concentrations (PVCs) of 30% and above.

### SUMMARY OF THE INVENTION

This invention provides in one form a coating composition comprising an aqueous film-forming dispersion of addition polymer comprising acetoacetate functional groups and a water soluble aminoalkyl-alkoxysilane or aminoalkyl-silanol crosslinking agent having at least one primary amine group.

Preferably the acetoacetate groups are provided by copolymerising addition polymerisable monomers containing acetoacetate functional groups.

More preferably the acetoacetate groups are incorporated by polymerisation of a monomer selected from the group consisting of allyl acetoacetate, acetoacetoxyethyl methacrylate, acetoacetoxypropyl methacrylate and acetoacetoxybutyl methacrylate and the corresponding acrylates.

Most preferably the acetoacetate groups are incorporated by polymerisation of acetoacetoxyethyl methacrylate (AAEM).

Preferably the aminoalkyl-alkoxysilane crosslinking agent has three alkoxy groups bound to the silicon atom.

Preferably the aminoalkyl-alkoxysilane crosslinking agent comprises a secondary amine group in addition to the primary amine group.

Preferably the coating composition includes an acid accelerator which increases the rate of crosslinking and which is preferably a carboxylic acid group covalently bonded to the addition polymer.

Preferably the aqueous dispersion is sterically stabilised and more preferably it has covalently bonded alkylene oxide chains that confer steric stability.

Preferably the coating composition includes pigments and extenders to a PVC of at least 30%.

### DETAILED DESCRIPTION OF THE INVENTION

The aqueous film-forming dispersions of this invention are usually copolymers of the acetoacetate functional monomers and other addition polymerisable comonomers. Examples of useful comonomers include alkyl acrylates and methacrylates where the alkyl group has 1 to 20 (and more preferably 1 to 8) carbon atoms, styrene, vinyl acetate, acrylonitrile and simple or substituted olefins. Monomers containing other functional groups such as hydroxyl or carboxyl groups may be used.

In practice, in paint formulations best results in terms of crosslinking rate and adhesion are achieved when carboxylic acid groups are included by, for example, copolymerisation of methacrylic acid.

Minor amounts of functional monomers directed towards specific objectives such as adhesion promotion may also be incorporated. However this may be unnecessary as we believe the acetoacetate functional groups may provide beneficial adhesion properties as well as sites for crosslinking. The selection of comonomers and their relative proportions is based on well established principles in the art and generally balance properties such as flexibility, hardness and water resistance as well as cost. In some applications advantageous properties can be achieved by combining polymer dispersions of differing Tgs. For example, when formulated as a primer/filler, improved sanding can be achieved by using more than 5% of a hard dispersion, for example 20% of Tg 70°C dispersion combined with 80% of Tg 17°C dispersion. However, in some formulations one needs to take into account that the hard dispersion may affect other properties by contributing to the overall PVC of a paint composition.

The minimum film forming temperature (MFT) of the aqueous dispersion in this invention is usually in the range of 0 - 30°C. In general the MFT of an aqueous dispersion of film forming polymer is determined by the Tg of the copolymer of the dispersion. When formulated as a refinish primer/filler we have found the Tg of the copolymer dispersion affects the early sanding properties as well as later film properties and should usually be in the range of 10-40°C for the best balance of film properties.

The aqueous dispersions of the present invention may be prepared by known means, especially emulsion polymerisation. However best results are achieved where the aqueous dispersion is prepared such that it is sterically stabilised. The term sterically stabilised is an art-recognised term in colloid science and means that, in aqueous systems, colloidal stability is conferred by the presence of a sheath of water soluble polymeric or uncharged oligomeric chains anchored to the particle surface. By sterically stabilised dispersions it is meant that whilst other types of stability, such as anionic or cationic, may be present there is also colloidal stability conferred by steric stabilisation. For the purposes of this invention a convenient test to ascertain whether the dispersion is sterically stabilised or not is to increase the ionic concentration of the aqueous phase to such an extent that ionic stabilisation is nullified and then to assess the stability of the dispersion.

Examples of the preparation of dispersions suitable for the working of the present invention are described in Australian Patent No. 618,176. Also within the scope of the present invention are polymer dispersions which have a core/shell structure whereby the polymer properties at the outer shell of the particle differ from those towards the centre of the particle. In the case of core/shell structure dispersion particles rather than relying upon the Fox equation to calculate Tg we prefer to use practical values as determined using temperature gradient bars and assessing the temperature of discontinuity in film formation. Typically the molecular weights of the dispersion polymer are at least 25,000 (Mn) and usually about 50,000 which are generally substantially higher than the molecular weight of polymers prepared in organic solvents.

While a number of monomers may be used to introduce the acetoacetate functionality, AAEM is our preferred monomer and in practice 10-25% w/w of total addition monomers and more preferably 15-20% w/w give best results. As this monomer is relatively expensive, in practice we minimise its level consistent with achieving the rate and extent of crosslinking desired to give coatings with acceptable film properties.

Because of the rapid crosslinking of compositions of the present invention they are usually used as two-pack systems. Generally the aqueous dispersion phase is separately packaged from the aminoalkyl-alkoxysilane phase until shortly before application is desired when mixing of the two packs takes place. It is therefore most convenient for mixing that the aminoalkyl-alkoxysilane crosslinker is a relatively low viscosity liquid so that the use of additional organic solvent is not required to dissolve or reduce the viscosity of the crosslinker before it can be conveniently mixed with the aqueous disperse phase. However also within the scope of the present invention is the use of prehydrolysed aminoalkyl-alkoxysilane or aminoalkyl-silanol. In this case it is acceptable to use an aqueous solution of the aminoalkyl-silanol, usually prepared by adding the aminoalkyl-alkoxysilane to water. In some embodiments it is convenient to use the aminoalkyl-alkoxysilane component diluted with water-miscible organic solvents. In practice this can be used to increase the volume of the aminoalkyl-silanol component for more convenient mixing ratios such as 2:1 or 4:1 by volume where the aminoalkyl-alkoxysilane is the smaller of the two packs. Despite the presence of organic solvents these coatings are still regarded as water-borne as the majority of the volatile solvent present in the combined two pack paint is water.

The aminoalkyl-alkoxysilane is required to have at least one primary amine group. Better results in terms of crosslinking rate have been achieved when the aminoalkyl-alkoxysilane also has a secondary amine present. Best results have been achieved with a diamine, Dow Corning material Z6020, which is gamma-[N- (beta-aminoethyl) amino]propyltrimethoxysilane. This provides more rapid crosslinking than the monoamine A-1100, [(gamma-aminopropyl) triethoxysilane] supplied by Union Carbide. The aminoalkyl-alkoxysilane is required to be water soluble and by this we mean it is water soluble when visually assessed sixty minutes after adding 1g to 10g of water at 25°C under gentle agitation. Obviously in the case of aminoalkyl-alkoxysilane, reaction can take place with the water in this test and it is the solubility after reaction that is important. This is believed to be substantially complete after one hour.

In practice a working pot life of at least a few hours is required so that minor touch up to applied primer/filler can be made without the necessity to mix a new batch of paint. Compositions prepared according to our invention can have a satisfactory pot-life of 24 hours at ambient temperatures. This is a surprising result as when the aminoalkyl-alkoxysilane crosslinking agent is used and known to occur, reaction with water prior to application is expected. Nevertheless, a favourable balance of pot-life and film properties can be achieved.

It is believed in our preferred compositions that the steric stabilisation of the particles may contribute to good spray application properties as the good colloidal stability of the steric stabilisation of the dispersion is not adversely affected by addition of the aminoalkyl-alkoxysilane crosslinker.

The relative proportions of disperse phase and crosslinker are selected so that the mole ratio of acetoacetate functional group to primary amine group of the aminoalkyl-alkoxysilane are in the range 10:1 to 1:2, and more preferably 5:1 to 1:1 and most preferably 4:1. The extent and rate of cross-linking is affected by this ratio. In a refinish primer/filler at ratios of 1:1 early sanding is very good but water resistance properties such as humidity performance may be compromised. Changing the ratio of acetoacetate to amine varies the humidity performance, the rate of crosslinking and early sandability properties. The best balance appears to be the 4:1 ratio as later exemplified in Example 1. This is a surprising result as it would normally be expected that balanced or close to balanced stoichiometry would produce the optimum result. This may be a consequence of the lack of accessibility of the acetoacetate groups in the dispersion polymer.

The coating compositions of the present invention are pigmented when used as a refinish primer/filler and typically have a pigment volume concentration of 40-48%. Normally the pigment is dispersed in the aqueous polymer dispersion phase.

In this specification the terms aqueous and water-borne have their art-recognised meaning which includes minor amounts of co-solvents and other volatile organic material provided water constitutes more than 50%, and preferably at least 80% of the volatile phase.

The invention will be further illustrated by the following examples of preferred embodiments.

### Example 1

Preparation of a refinish primer/filler having a mole ratio of acetoacetate to primary amine groups of 4:1.

### A. Preparation of an aqueous film forming dispersion of Tg 17°C containing 15% AAEM by weight.

| Stage | Material | Wt.% | | |
|---|---|---|---|---|
| A | Fatty alcohol ethoxylate surfactant* | 0.048 | | |
| B | Water | 6.564 | | |
| C | t-butyl perbenzoate | 0.015 | | |
| D | 30% hydrochloric acid | trace | | |
| E | Ferrous sulphate | 0.010 | | |
| | Water | 0.965 | | |
| F | Fatty alcohol ethoxylate surfactant | 0.787 | | |
| | t-butyl perbenzoate | 0.375 | | |
| | Water | 2.17 | | |

| Feeds | | 1 | 2 | 3 |
|---|---|---|---|---|
| G | Methyl methacrylate | 3.02 | 5.07 | 16.661 |
| | Butyl acrylate | 2.10 | 3.54 | 11.279 |
| | Methacrylic acid | 0.032 | 0.053 | 0.162 |
| | AAEM | 1.04 | 1.74 | 4.532 |
| H | Fatty alcohol ethoxylate surfactant | 0.334 | 0.568 | 1.070 |
| I | Water | 3.25 | 8.130 | 24.625 |
| J | Sodium erythorbate | 0.027 | 0.046 | 0.146 |
| | Water | 0.275 | 0.462 | 1.430 |

| | | | | |
|---|---|---|---|---|
| * as described in Example 2 of International Patent Application No. PCT/AU90/00565. | | | | |

Stages E, F and J were each premixed. Stages A-C were charged to a reaction vessel equipped with stirrer, condenser, nitrogen blanket and feed facilities. The pH was adjusted to pH 3 with D, warmed to 30°C, and then E was added. Feeds, designated 1, 2 and 3 were each emulsified under high shear and added successively over 50 minutes, 45 minutes and 120 minutes respectively. Stage F was added at the same time as Feed 1. The reaction mixture was maintained at 30°C throughout the reaction process. After polymerisation the solids content was 51% and this dispersion was designated 1A. The number average molecular weight of this polymer was measured and found to be 61,000.

### B. Preparation of primer/filler using dispersion 1A with PVC 48%.

| Stage | Material | Wt.% |
|---|---|---|
| A | Triton X405 (octyl phenol ethoxylate) | 0.285 |
| | AMP 95 (2-amino methyl propanol) | 0.571 |
| | Bevaloid 4226 (antifoam) | 0.100 |
| B | Water | 14.847 |
| C | RHD2 TiO₂ | 13.636 |
| | Aerosil (Silica) | 1.235 |
| | Barytes B4AA (Coarse) | 12.967 |
| | Talc micromist (fine) | 14.115 |
| | Zinc oxide | 5.014 |
| | Zn phosphate | 2.495 |
| D | Dispersion 1A | 31.767 |
| E | Texanol | 1.588 |
| F | Black tinter | 0.05 |
| | Yellow tinter | 1.30 |
| | Red tinter | 0.03 |
| | | 100.00 |

Stage C was added in sequence with stage B to premixed stage A. Dispersion of pigment and fillers was achieved by high speed dispersion. Stage D was added slowly to the millbase and mixing continued for 5 mins. Stage E was then added, followed by Stage F and the paint stirred for 20 mins. before filtering.

This composition was designated the "first" pack.

The "second" pack consisted of the aminoalkyl-alkoxysilane curing agent (Dow Z6020).

To 100 parts of the "first" pack 0.64 parts by weight of the "second" were added with stirring. The combined packs were then adjusted to suitable spray viscosity by the addition of water.

### C. Test Methods for primer/filler

### Dry Sanding

The primer/filler was spray applied over a mild steel panel substrate to give a dry film build of approximately 50 µm.

The primer was hand sanded using P360 paper after two hours drying at ambient temperature and assessed for powder, clogging and ease of removal.

Panels were topcoated with a commercial acrylic/isocyanate paint after sanding (after two hours drying).

### Solvent Resistance (primer/filler only)

Films of 50 µm dry film build were assessed for swelling and rub through using damped cotton wool. Two solvents were utilised: Prekleano (95% white spirit, 5% isopropanol) and xylene.

### Humidity (top coated system)

Test panels (suitably backed) were placed in a fog cabinet (38°C, 100% RH) for 10 days. Panels were assessed daily for blistering/corrosion/sinkage. Panels were removed after 10 days and adhesion tested at two hours and twenty-four hours recovery.

### Hardness (primer/filler only)

This was measured using a microindentation instrument (Knoop hardness) after the paint film was aged for 4.5 hours at 25°C

### Salt Spray Corrosion (top coated system)

After ageing the panel for 7 days a "X-cut" was scribed onto the test panels which were subsequently placed in the salt spray cabinet for 500 hours. Panels were regularly assessed for blistering, corrosion and undercut. At the end of the test, the area around the X-cut was stripped and examined for corrosion.

### Water Immersion (top coated system)

Test panels were immersed in distilled water at 40°C for 5 days after which time they were assessed for adhesion, blistering, corrosion and sink back. If satisfactory, they were returned for a further 5 days and reassessed.

### Chip Resistance (top coated system)

The test panel was placed into the "gravelometer machine," being magnetically held vertically at 90° to the airflow. The airstream was adjusted to the specified air pressure and 250 ml of stone chips poured into the airstream, which blows them onto the panel surface. Total test time was 15 sec. The panel was taken out and loose paint removed by means of filament tape adhesion. Assessment was against standard photographs (0 = total failure, 10 = no damage).

### D. Test Results

| Property | Example 1 | Commercial Control* |
|---|---|---|
| Dry sanding | Fair | Very good |
| Humidity resistance | Excellent | Very good |
| Water immersion | Excellent | Excellent |
| Salt spray | Good | Very Good |
| Knoop Hardness | 1.6 | 3.2 |
| Chip Resistance | Excellent | Fair |

| | | |
|---|---|---|
| * Commercial organic solvent borne two-pack acrylic/isocyanate primer/filler. | | |

These results show a favourable balance of properties compared to the organic solvent-borne control. The early sanding properties of the composition according to this invention are worse than the control but the chip resistance is considerably improved.

### Example 2 and 3

These examples show the effect of varying the acetoacetate to primary amine mole ratio.

Example 1 was followed, except that the proportion of crosslinker was increased to provide mole ratios of AAEM to NH₂ of 2:1 (Example 2) and 1:1 (Example 3). The paints were prepared and tested as for Example 1 to give the following results.

| Property | Example 2 | Example 3 |
|---|---|---|
| Dry sanding | Very Good | Very Good |
| Humidity resistance | Good | Fair |
| Water immersion | Good | Fair |
| Salt spray | Fair | Good |
| Knoop hardness | 1.9 | 2.3 |
| Chip resistance | Good | Fair |

Both these paints were judged to be useful primer/fillers with very good sanding properties.

### Example 4

This example shows the effect of having copolymerised methacrylic acid in the dispersion.

A dispersion was prepared as for 1A but without the presence of the 0.5% methacrylic acid. When formulated as a paint as in Example 1 the xylene solvent resistance after two hours drying was 20 double rubs compared to 80 double rubs for the composition of Example 1. This example illustrates the accelerating effect of copolymerised carboxyl groups.

### Example 5-12

These examples illustrate the effect of varying levels of AAEM in the dispersion and varying ratios of AAEM to NH₂ and the effect of these variations have on xylene solvent resistance. Example 5 and 9 are comparative examples outside the scope of the present invention.

Dispersions were prepared as for dispersion 1A but with 10% AAEM (dispersion 5A) and 25% AAEM/dispersion (dispersion 9A). Solvent (xylene) resistance was assessed after two hours drying. The results are set out below.

| **Example No.** | **Dispersion** | **% AAEM** | **AAEM: NH**_{**2**} | **Xylene Solvent Resistance** |
|---|---|---|---|---|
| 5* | 5A | 10 | 1:0 | 5 |
| 6 | 5A | 10 | 4:1 | 64 |
| 7 | 5A | 10 | 2:1 | 81 |
| 8 | 5A | 10 | 1:1 | 77 |
| 9* | 9A | 25 | 1:0 | 9 |
| 10 | 9A | 25 | 4:1 | 78 |
| 11 | 9A | 25 | 2:1 | 112 |
| 12 | 9A | 25 | 1:1 | 112 |

| | | | | |
|---|---|---|---|---|
| * comparative example | | | | |

A commercial water-borne one-pack primer was also tested for solvent resistance and found to have eight double rubs.

### Example 13

This example illustrates the preparation of paint using a combination of film forming dispersions of differing Tg's and the evaluation of such paint.
A Preparation of MMA/BA/AAEM (5%) dispersion of Tg 70°C.

| Stage | Material | Wt.% | |
|---|---|---|---|
| A | Fatty alcohol ethoxylate surfactant* | 1.29 | |
| B | Water | 7.48 | |
| C | t-butyl perbenzoate | 0.38 | |
| D | 30% hydrochloric acid | trace | |
| E | Ferrous sulphate | 0.009 | |
| | Water | 0.948 | |

| Feeds | | 1 | 2 |
|---|---|---|---|
| F | Methyl methacrylate | 14.39 | 26.77 |
| | Butyl acrylate | 1.53 | 2.85 |
| | AAEM | 0.84 | 1.56 |
| G | Fatty alcohol ethoxylate surfactant* | .07 | 1.23 |
| H | Water | 13.24 | 24.06 |
| I | Sodium erythorbate | 0.075 | 0.14 |
| | Water | 0.746 | 1.39 |

| | | | |
|---|---|---|---|
| * As described in Example 3 of International Patent Application No. PCT/AU90/00565 | | | |

Stages E and I were each premixed. Stages A-C were charged to a reaction vessel equipped with stirrer, condenser, nitrogen blanket and feed facilities. The pH was then adjusted to pH 3 with D, warmed to 70°C, and then E was added. Feeds, designated 1 and 2 were each emulsified under high shear and added successively over 95 minutes and 120 minutes respectively. The reaction mixture was maintained at 70°C throughout the reaction. After polymerisation the solids content was 51% and this was designated dispersion 13A. The number average molecular weight of the polymer was 38,000.

### B. Preparation of MMA/BA/MAA (0.5%)/AAEM (25%) dispersion of Tg 17°C.

The method for preparing dispersion 1A was repeated except that the monomer composition was varied by using the following feed stages.

| Feeds | 1 | 1 | 2 | 3 |
|---|---|---|---|---|
| G | Methyl methacrylate | 2.62 | 4.40 | 14.42 |
| | Butyl acrylate | 1.82 | 3.05 | 10.00 |
| | Methacrylic acid | 0.031 | 0.053 | 0.164 |
| | AAEM | 1.72 | 2.90 | 7.55 |
| H | Fatty alcohol ethoxylate surfactant | 0.33 | 0.565 | 1.08 |
| I | Water | 3.26 | 5.13 | 24.63 |
| J | Sodium erythorbate | 0.027 | 0.057 | 0.156 |
| | Water | 0.276 | 0.57 | 1.56 |

This dispersion was designated 13B. The number average molecular weight of this polymer was 50,000.

### C. Preparation of paint.

Paint was prepared as in Example 1 except that the pigment and extender levels were adjusted to provide a PVC of 40%, and 20% of dispersion 13A and 80% of dispersion 13B were used as the binder. The mole ratio of AAEM to NH₂ was 4:1.

The test results are as follows:

| Property | Example 13 |
|---|---|
| Dry sanding | Excellent |
| Humidity resistance | Excellent |
| Salt Spray | Very good |
| Knoop Hardness | 2.5 |
| Chip Resistance | Very good |

This paint demonstrates a favourable balance of early properties.

## Claims

1. A coating composition comprising an aqueous film forming dispersion of addition polymer comprising acetoacetate functional groups and a water soluble aminoalkyl-alkoxysilane or aminoalkyl-silanol crosslinking agent having at least one primary amine group.

2. A coating composition as defined in claim 1 wherein the crosslinking agent is an aminoalkyl-alkoxysilane having three alkoxy groups bonded to the silicon atom.

3. A coating composition as defined in claim 2 wherein the crosslinking agent includes a secondary amine group in addition to the primary amine group.

4. A coating composition as defined in any one of claims 1-3 wherein the aqueous dispersion is sterically stabilized by having covalently bound alkylene oxide chains.

5. A coating composition as defined in claim 4 further comprising pigments and extenders to a PVC of at least 30%.

6. A coating composition as defined in claim 1 wherein the acetoacetate functional groups are provided by copolymerising 10-25% w/w of total addition monomers of acetoacetoxyethyl methacrylate.

7. A coating composition as defined in any one of claims 1-6 wherein the mole ratio of acetoacetate functional groups to primary amine groups of the crosslinking agent is in the range 5:1 to 1:1.

8. A coating composition as defined in claim 7 wherein the mole ratio of the acetoacetate functional groups to primary amine groups of the crosslinking agent is approximately 4:1.

9. A coating composition as defined in any one of claims 1-8 wherein the molecular weight (Mn) of the addition polymer is at least 25,000.

10. A coating composition as defined in claim 9 wherein the aqueous dispersion of film forming polymer comprises a mixture of aqueous polymer dispersions one having a low Tg and one having a high Tg.

11. A coating composition as defined in claim 6 wherein the acetoacetate functional groups are provided by copolymerising 15-20% w/w of total addition monomer of acetoacetoxyethyl methacrylate.

12. A coating composition as defined in any one of claims 1-11 wherein the aqueous dispersion further comprises copolymerised carboxylic acid monomer.

13. A coating compostion according to any preceeding claim in which the acetoacetate functional groups and the water soluble aminoalkyl-alkoxysilane or aminoalkyl-silanol crosslinking agent are contained in separate packs so as to form a two pack system.

## Patentansprüche

1. Beschichtungszusammensetzung, die eine wäßrige filmbildende Dispersion eines Additionspolymers, das funktionelle Acetoacetatgruppen aufweist, sowie ein wasserlösliches Aminoalkylalkoxysilan- oder Aminoalkylsilanol-Vernetzungsmittel mit wenigstens einer primären Aminogruppe umfaßt.

2. Beschichtungszusammensetzung nach Anspruch 1, bei der das Vernetzungsmittel ein Aminoalkylalkoxysilan ist, das drei an das Siliciumatom gebundene Alkoxygruppen aufweist.

3. Beschichtungszusammensetzung nach Anspruch 2, bei der das vernetzungsmittel zusätzlich zu der primären Aminogruppe eine sekundäre Aminogruppe aufweist.

4. Beschichtungszusammensetzung nach irgendeinem der Ansprüche 1 bis 3, bei der die wäßrige Dispersion dadurch sterisch stabilisiert ist, daß sie covalent gebundene Alkylenoxidketten aufweist.

5. Beschichtungszusammensetzung nach Anspruch 4, die außerdem Pigmente sowie Füllstoffe bis zu einer PVC von wenigstens 30% aufweist.

6. Beschichtungszusammensetzung nach Anspruch 1, bei der die funktionellen Acetoacetat-Gruppen dadurch bereitgestellt werden, daß man 10-25 % des Gewichts der gesamten Addtionsmonomeren Acetoacetoxyethylmethacrylat copolymerisiert.

7. Beschichtungszusammensetzung nach irgendeinem der Ansprüche 1 bis 6, bei der das Molverhältnis der funktionellen Acetoacetat-Gruppen zu den primären Aminogruppen des Vernetzungsmittels im Bereich von 5:1 bis 1:1 liegt.

8. Beschichtungszusammensetzung nach Anspruch 7, bei der das Molverhältnis der funktionellen Acetoacetat-Gruppen zu den primären Aminogruppen des Vernetzungsmittels etwa 4:1 beträgt.

9. Beschichtungszusammensetzung nach irgendeinem der Ansprüche 1 bis 8, bei der das Molekulargewicht (Mn) des Additionspolymers wenigstens 25.000 beträgt.

10. Beschichtungszusammensetzung nach Anspruch 9, bei der die wäßrige Dispersion des filmbildenden Polymers eine Mischung von wäßrigen Polymerdispersionen umfaßt, von denen eine einen niedrigen Tg und eine einen hohen Tg aufweist.

11. Beschichtungszusammensetzung nach Anspruch 6, bei der die funktionellen Acetoacetat-Gruppan dadurch bereitgestellt werden, daß man 15-20 % des Gewichts des gesamten Additionsmonomers Acetoacetoxyethylmethacrylat copolymerisiert.

12. Beschichtungszusammensetzung nach irgendeinem der Ansprüche 1 bis 11, bei dem die wäßrige Dispersion außerdem ein copolymerisiertes Carbonsäuremonomer aufweist.

13. Beschichtungszusammensetzung nach irgendeinem vorausgehenden Anspruch, bei der die funktionellen Acetoacetat-Gruppen und das wasserlösliche Aminoalkylalkoxysilan- oder Aminoalkylsilanol-Vernetzungsmittel in getrennten Verpackungen enthalten sind und somit ein Zweibehältersystem bilden.

## Revendications

1. Composition de revêtement comprenant une dispersion aqueuse filmogène d'un polymère d'addition comprenant des groupes fonctionnels acéto-acétate et un agent de réticulation amino-alkyl-alkoxysilane ou amino-alkyl-silanol hydrosoluble ayant au moins un groupe amine primaire.

2. Composition de revêtement répondant à la définition suivant la revendication 1, dans laquelle l'agent de réticulation est un amino-alkyl-alkoxysilane ayant trois groupes alkoxy liés à l'atome de silicium.

3. Composition de revêtement répondant à la définition suivant la revendication 2, dans laquelle l'agent de réticulation comprend un groupe amine secondaire en plus du groupe amine primaire.

4. Composition de revêtement répondant à la définition suivant l'une quelconque des revendications 1 à 3, dans laquelle la dispersion aqueuse est stériquement stabilisée par la présence de chaînes oxyde d'alkylène liées par covalence.

5. Composition de revêtement répondant à la définition suivant la revendication 4, comprenant en outre des pigments et des diluants à une concentration pigmentaire volumique d'au moins 30 %.

6. Composition de revêtement répondant à la définition suivant la revendication 1, dans laquelle les groupes fonctionnels acéto-acétate sont fournis par copolymérisation de 10 à 25 % en poids/poids des monomères d'addition totaux de méthacrylate d'acéto-acétoxyéthyle.

7. Composition de revêtement répondant à la définition suivant l'une quelconque des revendications 1 à 6, dans laquelle le rapport molaire des groupes fonctionnels acéto-acétate aux groupes amine primaires de l'agent de réticulation est compris dans l'intervalle de 5:1 à 1:1.

8. Composition de revêtement répondant à la définition suivant la revendication 7, dans laquelle le rapport molaire des groupes fonctionnels acéto-acétate aux groupes amine primaires de l'agent de réticulaire est approximativement égal à 4:1.

9. Composition de revêtement répondant à la définition suivant l'une quelconque des revendications 1 à 8, dans laquelle le poids moléculaire (Mn) du polymère d'addition est au moins égal à 25 000.

10. Composition de revêtement répondant à la définition suivant la revendication 9, dans laquelle la dispersion aqueuse de polymère filmogène comprend un mélange de dispersions aqueuses de polymères dont l'une a une Tg basse et l'autre a une Tg élevée.

11. Composition de revêtement répondant à la définition suivant la revendication 6, dans laquelle les groupes fonctionnels acéto-acétate sont fournis en copolymérisant 15 à 20 % en poids/poids des monomères d'addition totaux de méthacrylate d'acéto-acétoxyéthyle.

12. Composition de revêtement répondant à la définition suivant l'une quelconque des revendications 1 à 11, dans laquelle la dispersion aqueuse comprend en outre un monomère acide carboxylique copolymérisé.

13. Composition de revêtement suivant l'une quelconque des revendications précédentes, dans laquelle les groupes fonctionnels acéto-acétate et l'agent de réticulation amino-alkyl-alkoxysilane ou amino-alkyl-silanol hydrosoluble sont présents dans des emballages distincts de manière à former un système à deux composants.
